# EUROPEAN PATENT APPLICATION

(11) **EP 3 952 598 A1**
(43) Date of publication of application: **09.02.2022**
(21) Application number: 20791167.8
(22) Date of filing: 17.04.2020
(51) Int. Cl.: H04W 76/10

(54) **MANAGEMENT METHOD AND APPARATUS FOR TERMINAL DEVICE**

(30) Priority: 18.04.2019 CN 201910312419
(71) Applicant: Huawei Technologies Co., Ltd., Shenzhen, Guangdong 518129 (CN)
(72) Inventor: MA, Jingwang, Shenzhen, Guangdong 518129 (CN)
(74) Representative: Gill Jennings & Every LLP
(86) International application number: PCT/CN2020/085331
(87) International publication number: WO 2020/211837

(57) **Abstract**

This application provides a terminal device management method and apparatus. The method includes: When determining that wake-up time of a terminal device is about to arrive (or arrives), a network device obtains a context of the terminal device; and when determining that sleep time of the terminal device is about to arrive (or arrives), the network device stores the context of the terminal device. In this way, when the terminal device subsequently initiates establishment of a PDU session, the UE does not need to report the context of the terminal device again, thereby reducing signaling overheads, helping avoid a signaling storm, and increasing a success rate of entering a wake-up state by the terminal device.

## Description

### CROSS-REFERENCE TO RELATED APPLICATIONS

This application claims priority to Chinese Patent Application No. 201910312419.3, filed with the China National Intellectual Property Administration on April 18, 2019 and entitled "TERMINAL DEVICE MANAGEMENT METHOD AND APPARATUS", which is incorporated herein by reference in its entirety.

### TECHNICAL FIELD

This application relates to the field of mobile communication technologies, and in particular, to a terminal device management method and apparatus.

### BACKGROUND

A large quantity of terminal devices will be used in vertical industry factories in the future. Based on service requirements, the large quantity of terminal devices are classified into different types, for example, production devices (such as robotic arms) used in production lines, cameras used for surveillance, or automated guided vehicles (Automated Guided Vehicles, AGVs) used to transport objects. Each type of terminal device has a fixed working time period. For example, in a time period from 07:00 to 23:00, the terminal device is in a wake-up state and works, and in a time period from 23:00 to 07:00, the terminal device is suspended and is in a sleep state.

When the terminal device enters the sleep state, a processing procedure in a conventional technology is as follows: A network side enables the terminal device to enter an idle (idle) state, and the network side releases a protocol data unit (protocol data unit, PDU) session (session) and releases a context of the terminal device. When the terminal device enters the wake-up state and prepares to work the next day, the network side enables the terminal device to report the context of the terminal device again, to re-establish a PDU session for the terminal device.

The foregoing solution has the following problem: When a large quantity of terminal devices simultaneously enter a wake-up state and report contexts of the terminal devices, a signaling storm is caused, resulting in network congestion. Consequently, some terminal devices may fail to report contexts, causing PDU session failures, and affecting communication efficiency of the terminal devices.

### SUMMARY

This application provides a terminal device management method and apparatus, to increase an access success rate of a terminal device, and improve communication efficiency of the terminal device.

According to a first aspect, this application provides a terminal device management method. The method includes: A network device obtains wake-up time of a terminal device, and obtains a context of the terminal device based on the wake-up time; and the network device establishes a session of the terminal device based on the context of the terminal device. Based on this solution, when determining that the wake-up time of the terminal device is about to arrive (or arrives), the network device obtains the context of the terminal device. In this way, when the terminal device initiates establishment of a PDU session, the terminal device does not need to report the context of the terminal device again, thereby reducing signaling overheads, helping avoid a signaling storm, and increasing a success rate of entering a wake-up state by the terminal device.

In a possible implementation method, the obtaining a context of the terminal device based on the wake-up time includes: When determining that the wake-up time of the terminal device is about to arrive, the network device obtains the context of the terminal device.

In a possible implementation method, that the network device determines that the wake-up time of the terminal device is about to arrive includes: When determining that a local timer expires, the network device determines that the wake-up time of the terminal device is about to arrive; or the network device receives indication information from a data management network element, where the indication information is used to indicate that the wake-up time of the terminal device is about to arrive, and the indication information is sent after a timer on the data management network element expires.

In a possible implementation method, that the network device obtains the wake-up time of the terminal device includes: The network device receives notification information from an external industry center, where the notification information includes the wake-up time of the terminal device.

In a possible implementation method, the notification information is used to indicate to obtain the context of the terminal device when the wake-up time of the terminal device is about to arrive; or the notification information further includes information used to indicate to obtain the context of the terminal device when the wake-up time of the terminal device is about to arrive.

In a possible implementation method, the notification information further includes an identifier of the terminal device and/or a terminal group identifier, and a terminal group indicated by the terminal group identifier includes the terminal device.

In a possible implementation method, the network device increases a capacity of the network device based on the context of the terminal device.

In a possible implementation method, that the network device obtains the context of the terminal device includes: The network device obtains the context of the terminal device from a local database or the data management network element.

In a possible implementation method, the network device is an access network device, and the method further includes: The network device adjusts deployment of the network device based on a location relationship between the network device and the terminal device.

In a possible implementation method, that the network device adjusts the deployment of the network device includes: The network device adjusts an antenna direction and/or coverage of the network device.

In a possible implementation method, the network device is an access network device, a mobility management network element, a session management network element, or a user plane network element.

According to a second aspect, this application provides a terminal device management method. The method includes: A network device obtains sleep time of a terminal device, and stores a context of the terminal device based on the sleep time; and the network device releases a session of the terminal device. Based on the foregoing solution, when determining that the sleep time of the terminal device is about to arrive (or arrives), the network device stores the context of the terminal device. In this way, when the terminal device subsequently needs to initiate establishment of a PDU session, the terminal device does not need to report the context of the terminal device again, but directly obtains the context of the terminal device from storage space in advance, thereby reducing signaling overheads, helping avoid a signaling storm, and increasing a success rate of entering a wake-up state by the terminal device.

In a possible implementation method, that the network device stores the context of the terminal device based on the sleep time includes: When determining that the sleep time of the terminal device is about to arrive, the network device stores the context of the terminal device.

In a possible implementation method, that the network device determines that the sleep time of the terminal device is about to arrive includes: When determining that a local timer expires, the network device determines that the sleep time of the terminal device is about to arrive; or the network device receives indication information from a data management network element, where the indication information is used to indicate that the sleep time of the terminal device is about to arrive, and the indication information is sent after a timer on the data management network element expires.

In a possible implementation method, that the network device obtains the sleep time of the terminal device includes: The network device receives notification information from an external industry center, where the notification information includes the sleep time of the terminal device.

In a possible implementation method, the notification information is used to indicate to store the context of the terminal device when the sleep time of the terminal device is about to arrive; or the notification information further includes information used to indicate to store the context of the terminal device when the sleep time of the terminal device is about to arrive.

In a possible implementation method, the notification information further includes an identifier of the terminal device and/or a terminal group identifier, and a terminal group indicated by the terminal group identifier includes the terminal device.

In a possible implementation method, the network device reduces a capacity of the network device based on the context of the terminal device.

In a possible implementation method, that the network device stores the context of the terminal device includes: The network device stores the context of the terminal device in a local database; and/or
the network device stores the context of the terminal device in the data management network element.

In a possible implementation method, the network device is an access network device, and the method further includes: The network device adjusts deployment of the network device based on a location relationship between the network device and the terminal device.

In a possible implementation method, that the network device adjusts the deployment of the network device includes: The network device adjusts an antenna direction and/or coverage of the network device.

In a possible implementation method, the network device is an access network device, a mobility management network element, a session management network element, or a user plane network element.

According to a third aspect, this application provides a terminal device management method. The method includes: A data management network element determines that wake-up time of a terminal device is about to arrive; and the data management network element sends indication information to a network device, where the indication information is used to indicate that the wake-up time of the terminal device is about to arrive.

In a possible implementation method, the determining that wake-up time of a terminal device is about to arrive includes: When determining that a local timer expires, the data management network element determines that the wake-up time of the terminal device is about to arrive.

In a possible implementation method, the data management network element receives a request message from the network device, where the request message is used to request to obtain the context of the terminal device; and the data management network element sends the context of the terminal device to the network device.

According to a fourth aspect, this application provides a terminal device management method. The method includes: A data management network element determines that sleep time of a terminal device is about to arrive; and the data management network element sends indication information to a network device, where the indication information is used to indicate that the sleep time of the terminal device is about to arrive.

In a possible implementation method, that the data management network element determines that the sleep time of the terminal device is about to arrive includes: If determining that a local timer expires, the data management network element determines that the sleep time of the terminal device is about to arrive.

In a possible implementation method, the data management network element receives a request message from the network device, where the request message includes the context of the terminal device; and the data management network element stores the context of the terminal device.

According to a fifth aspect, this application provides a terminal device management apparatus. The apparatus may be a network device, or may be a chip used in the network device. The apparatus has a function of implementing the embodiments of the first aspect or the embodiments of the second aspect. The function may be implemented by hardware, or may be implemented by hardware by executing corresponding software. The hardware or the software includes one or more modules corresponding to the foregoing function.

According to a sixth aspect, this application provides a terminal device management apparatus. The apparatus may be a data management network element, or may be a chip used in the data management network element. The apparatus has a function of implementing the embodiments of the third aspect or the embodiments of the fourth aspect. The function may be implemented by hardware, or may be implemented by hardware by executing corresponding software. The hardware or the software includes one or more modules corresponding to the foregoing function.

According to a seventh aspect, this application provides a terminal device management apparatus. The apparatus includes a processor and a memory. The memory is configured to store computer-executable instructions. When the apparatus runs, the processor executes the computer-executable instructions stored in the memory, to enable the apparatus to perform the methods according to the foregoing aspects.

According to an eighth aspect, this application provides a terminal device management apparatus. The apparatus includes a unit or means (means) configured to perform the steps in the foregoing aspects.

According to a ninth aspect, this application provides a terminal device management apparatus. The apparatus includes a processor and an interface circuit. The processor is configured to communicate with another apparatus by using the interface circuit, and perform the methods according to the foregoing aspects. There are one or more processors.

According to a tenth aspect, this application provides a terminal device management apparatus. The apparatus includes a processor, configured to: be connected to a memory, and invoke a program stored in the memory, to perform the methods according to the foregoing aspects. The memory may be located inside the apparatus, or may be located outside the apparatus. In addition, there are one or more processors.

According to an eleventh aspect, this application further provides a computer-readable storage medium. The computer-readable storage medium stores instructions. When the instructions are run on a computer, a processor is enabled to perform the methods according to the foregoing aspects.

According to a twelfth aspect, this application further provides a computer program product including instructions; and when the computer program product runs on a computer, the computer is enabled to perform the methods according to the foregoing aspects.

According to a thirteenth aspect, this application further provides a chip system. The chip system includes a processor, configured to perform the methods according to the foregoing aspects.

According to a fourteenth aspect, this application further provides a communication system. The communication system includes a network device configured to perform any method according to the first aspect and a data management network element configured to perform any method according to the third aspect.

According to a fifteenth aspect, this application further provides a communication system. The communication system includes a network device configured to perform any method according to the second aspect and a data management network element configured to perform any method according to the fourth aspect.

### BRIEF DESCRIPTION OF DRAWINGS

FIG. 1 is a schematic diagram of a possible network architecture according to this application;
FIG. 2 is a schematic flowchart of a terminal device management method according to this application;
FIG. 3 is a schematic flowchart of another terminal device management method according to this application;
FIG. 4 is a schematic flowchart of another terminal device management method according to this application;
FIG. 5 is a schematic flowchart of another terminal device management method according to this application;
FIG. 6 is a schematic flowchart of another terminal device management method according to this application;
FIG. 7 is a schematic flowchart of another terminal device management method according to this application;
FIG. 8 is a schematic diagram of a terminal device management apparatus according to this application;
FIG. 9 is a schematic diagram of another terminal device management apparatus according to this application; and
FIG. 10 is a schematic diagram of another terminal device management apparatus according to this application.

### DESCRIPTION OF EMBODIMENTS

To make objectives, technical solutions, and advantages of this application clearer, the following further describes this application in detail with reference to the accompanying drawings. A specific operation method in method embodiments may also be used in an apparatus embodiment or a system embodiment. In the descriptions of this application, unless otherwise stated, "a plurality of' means two or more than two.

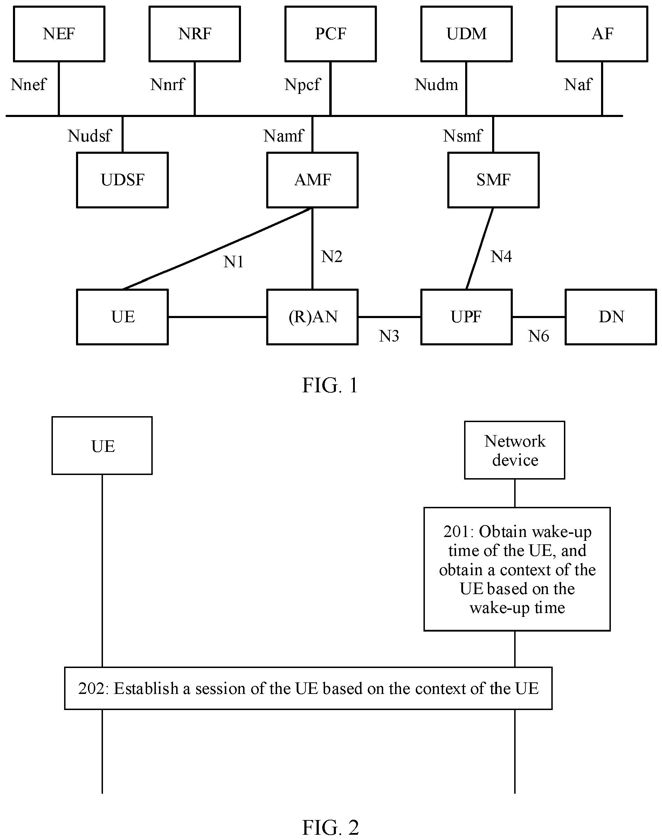

FIG. 1 is a schematic diagram of a 5th generation (5th generation, 5G) network architecture based on a service-oriented architecture. The 5G network architecture shown in FIG. 1 may include three parts: a terminal device, a data network (data network, DN), and a carrier network.

The carrier network may include a network exposure function (network exposure function, NEF) network element, a network repository function (network repository function, NRF) network element, a policy control function (policy control function, PCF) network element, a unified data management (unified data management, UDM) network element, an application function (application function, AF) network element, an unstructured data storage function (Unstructured Data Storage Function, UDSF) network element, an access and mobility management function (access and mobility management function, AMF) network element, a session management function (session management function, SMF) network element, a (radio) access network ((radio) access network, (R)AN), a user plane function (user plane function, UPF) network element, and the like. In the foregoing carrier network, the parts other than the (radio) access network may be referred to as core network parts. For ease of description, an example in which the (R)AN is referred to as a RAN is used below for description.

The terminal device (which may also be referred to as user equipment (user equipment, UE)) in this application is a device having a wireless transceiver function. The terminal device may be deployed on the land, including an indoor device, an outdoor device, a handheld device, or a vehicle-mounted device, deployed on a water surface (for example, on a ship), or may be deployed in the air (for example, on an airplane, a balloon, or a satellite). The terminal may be a mobile phone (mobile phone), a tablet (tablet), a computer having the wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), or the like.

The terminal device may establish a connection to the carrier network through an interface (for example, N1) provided by the carrier network, and use a service such as data and/or voice provided by the carrier network. The terminal device may further access the DN through the carrier network, and use a carrier service deployed on the DN and/or a service provided by a third party. The third party may be a service provider other than the carrier network and the terminal device, and may provide a service such as data and/or voice for the terminal device. A specific representation form of the third party may be specifically determined based on an actual application scenario, and is not limited herein.

An access network device is a device that provides a wireless communication function for the terminal. For example, the access network device includes but is not limited to: a next generation NodeB (gNodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a transmission reception point (transmission reception point, TRP), a transmission point (transmission point, TP), a mobile switching center, and the like.

In this application, a mobility management network element is a control plane network element provided by the carrier network, and is responsible for access control and mobility management for accessing the carrier network by the terminal device, for example, including functions such as mobility status management, temporary user identity assignment, and user authentication and authorization. In 5G, the mobility management network element may be the AMF network element. In future communication such as 6th generation (6th generation, 6G), the mobility management network element may still be the AMF network element, or may have another name. This is not limited in this application.

In this application, the session management network element is a control plane network element provided by the carrier network, and is responsible for managing a protocol data unit (protocol data unit, PDU) session of the terminal device. The PDU session is a channel used for transmission of a PDU, and the terminal device needs to transmit the PDU to the DN through the PDU session. The SMF network element is responsible for establishment, maintenance, deletion, and the like of the PDU session. The SMF network element includes session-related functions such as session management (for example, session establishment, modification, and release, including tunnel maintenance between the UPF and the RAN), selection and control of the UPF network element, service and session continuity (Service and Session Continuity, SSC) mode selection, and roaming. In 5G, the session management network element may be the SMF network element. In the future communication such as 6G, the session management network element may still be the SMF network element, or may have another name. This is not limited in this application.

In this application, a network vision perception network element may store environment information of a corresponding vertical industry (for example, map data in the vertical industry or layout information of a factory area, where the information can be obtained from a control center in the vertical industry), and information about deployment of a communication network in an area corresponding to the vertical industry (for example, an access network site or a coverage area of a network cell), and may further obtain information such as a moving path of the terminal device from the control center in the vertical industry. In 5G, the network vision perception network element may be an NVAF network element. In the future communication such as 6G, the network vision perception network element may still be the NVAF network element, or may have another name. This is not limited in this application.

In this application, the user plane network element is a gateway provided by a carrier, and is a gateway for communication between the carrier network and the DN. The UPF network element includes functions related to a user plane, for example, packet routing and transmission, packet detection, service usage reporting, quality of service (Quality of Service, QoS) processing, lawful interception, uplink packet detection, and downlink data packet storage. In 5G, the user plane network element may be the UPF network element. In the future communication such as 6G, the user plane network element may still be the UPF network element, or may have another name. This is not limited in this application.

The DN may also be referred to as a packet data network (packet data network, PDN), and is a network located outside the carrier network. The carrier network may access a plurality of DNs, and a plurality of services may be deployed on the DNs, to provide a service such as data and/or voice for the terminal device. For example, the DN is a private network of a smart factory, a sensor installed in a workshop of the smart factory may be the terminal device, a control server of the sensor is deployed in the DN, and the control server may provide a service for the sensor. The sensor may communicate with the control server, to obtain an instruction of the control server, transmit collected sensor data to the control server according to the instruction, and the like. For another example, the DN is an internal office network of a company, a mobile phone or a computer of an employee of the company may be the terminal device, and the mobile phone or the computer of the employee may access information, data resources, and the like on the internal office network of the company.

In this application, a data management network element is a control plane network element provided by the carrier, and is responsible for storing information such as a subscription permanent identifier (subscription permanent identifier, SUPI), a credential (credential), a security context (security context), and subscription data of a subscriber in the carrier network. The information stored in the UDM network element may be used for authentication and authorization when the terminal device accesses the carrier network. The subscriber in the carrier network may be specifically a subscriber using a service provided by the carrier network, for example, a subscriber using a SIM card of China Telecom, or a subscriber using a SIM card of China Mobile. The subscription permanent identifier (Subscription Permanent Identifier, SUPI) of the subscriber may be a number of the SIM card or the like. The credential and the security context of the subscriber may be stored small files such as an encryption key of the SIM card or information related to encryption of the SIM card, and are used for authentication and/or authorization. The security context may be cookie (cookie), a token (token), or the like stored in a local terminal (for example, a mobile phone) of the subscriber. The subscription data of the subscriber may be a supporting service of the SIM card, for example, a data package or available data of the SIM card. It should be noted that the permanent identifier, the credential, the security context, the cookie (cookie), and the token are equivalent to information related to authentication and authorization, and are not limited or distinguished between each other for ease of description in this application document of the present invention. Unless otherwise specified, the security context is used as an example for description in this embodiment of this application. However, this embodiment of this application is also applicable to authentication and/or authorization information described in another manner. In 5G, the data management network element may be the UDM network element. In the future communication such as 6G, the data management network element may still be the UDM network element, or may have another name. This is not limited in this application.

In this application, the network exposure network element is a control plane network element provided by the carrier. The NEF network element securely exposes an external interface of the carrier network to the third party. When the SMF network element needs to communicate with a third-party network element, the NEF network element may serve as a relay for communication between the SMF network element and the third-party network element. When the NEF network element serves as the relay, the NEF network element may translate identification information of a subscriber and identification information of the third-party network element. For example, when the NEF sends the SUPI of the subscriber from the carrier network to the third party, the NEF may translate the SUPI into an external identity (identity, ID) of the subscriber. When the NEF network element sends an external ID (an ID of the third-party network element) to the carrier network, the NEF network element may translate the external ID into the SUPI. In 5G, the network exposure network element may be the NEF network element. In the future communication such as 6G, the network exposure network element may still be the NEF network element, or may have another name. This is not limited in this application.

In this application, the policy control network element is a control plane function provided by the carrier, and is configured to provide a policy of the PDU session for the SMF network element. The policy may include a charging-related policy, a QoS-related policy, an authorization-related policy, and the like. In 5G, the policy control network element may be the PCF network element. In the future communication such as 6G, the policy control network element may still be the PCF network element, or may have another name. This is not limited in this application.

In FIG. 1, Nnef, Nudsf, Nnrf, Npcf, Nudm, Naf, Namf, Nnvaf, Nsmf, N1, N2, N3, N4, and N6 are interface sequence numbers. For meanings of these interface sequence numbers, refer to meanings defined in the 3GPP standard protocol. This is not limited herein.

The network vision perception network element in this application may be the NVAF network element shown in FIG. 1, or may be a network element that is in a future communication system and that has the function of the NVAF network element. The access network device in this application may be the RAN device in FIG. 1, or may be a network element that is in the future communication system and that has the function of the RAN device.

For ease of description, in this application, the AMF network element is referred to as an AMF for short, the NVAF network element is referred to as an NVAF for short, the RAN device is referred to as a RAN for short, and the terminal device is referred to as UE below.

It may be understood that the foregoing network elements or functions may be network elements in a hardware device, software functions running on dedicated hardware, or may be virtualized functions instantiated on a platform (for example, a cloud platform). Optionally, the foregoing network elements or functions may be implemented by one device, or may be jointly implemented by a plurality of devices, or may be one function module in one device. This is not specifically limited in this embodiment of this application.

To resolve the problem mentioned in the background, based on the architecture shown in FIG. 1, as shown in FIG. 2, this application provides a UE management method. The method is used by UE to enter a wake-up state (or a wake-up mode) from a sleep state (or a sleep mode).

The method includes the following steps.

Step 201: A network device obtains wake-up time of the UE, and obtains a context of the UE based on the wake-up time.

In a first implementation method, when determining that the wake-up time of the UE is about to arrive, the network device obtains the context of the UE.

For example, a timer is locally configured in the network device. When determining that the local timer expires, the network device determines that the wake-up time of the UE is about to arrive. In a specific implementation, the obtaining wake-up time of the UE in step 201 may be, for example, as follows: The network device receives notification information from an external industry center, where the notification information includes the wake-up time of the UE. Optionally, the notification information is used to indicate to obtain the context of the UE when the wake-up time of the UE is about to arrive, or the notification information further includes information used to indicate to obtain the context of the UE when the wake-up time of the UE is about to arrive. The notification information may further include an identifier of the UE or a terminal group identifier, and a terminal group indicated by the terminal group identifier includes the UE. In this way, the network device may set the timer based on the wake-up time, and then obtain the context of the UE based on the wake-up time after the timer expires. In a specific example, the wake-up time included in the notification information sent by the external industry center to the network device is 7:00 a.m., to indicate the network device to obtain the context of the UE when 7:00 a.m. is about to arrive. In this case, the network device may set a moment before 7:00 a.m., for example, 6:59 a.m., as an expiration time point of the timer according to a protocol definition or a preconfigured method. Therefore, whenever 6:59 a.m. arrives, the timer of the network device expires, and the network device is triggered to obtain the context of the UE.

For another example, the network device receives indication information from a data management network element, where the indication information is used to indicate that the wake-up time of the UE is about to arrive, and the indication information is sent after a timer on the data management network element expires. In a specific implementation, the obtaining wake-up time in step 201 may be, for example, as follows: The data management network element receives notification information from an external industry center, where the notification information includes the wake-up time of the UE. Optionally, the notification information is used to indicate to notify the network device when the wake-up time of the UE is about to arrive, or the notification information further includes information used to indicate to notify the network device when the wake-up time of the UE is about to arrive. The notification information may further include an identifier of the UE or a terminal group identifier, and a terminal group indicated by the terminal group identifier includes the UE. In this way, the data management network element may set the timer based on the wake-up time, and then send the indication information to the network device after the timer expires, so that the network device can obtain the context of the UE based on the wake-up time. In a specific example, the wake-up time included in the notification information sent by the external industry center to the data management network element is 7:00 a.m., to indicate the network device to notify the network device when 7:00 a.m. is about to arrive. In this case, the data management network element may set a moment before 7:00 a.m., for example, 6:59 a.m., as an expiration time point of the timer according to a protocol definition or a preconfigured method. Therefore, whenever 6:59 a.m. arrives, the timer of the network device expires, and the data management network element is triggered to send the indication information to the network device.

In a second implementation method, when determining that the wake-up time of the UE arrives, the network device obtains the context of the UE.

For example, a timer is locally configured in the network device. When determining that the local timer expires, the network device determines that the wake-up time of the UE arrives. In a specific implementation, the obtaining wake-up time of the UE in step 201 may be, for example, as follows: The network device receives notification information from an external industry center, where the notification information includes the wake-up time of the UE. Optionally, the notification information is used to indicate to obtain the context of the UE when the wake-up time of the UE arrives, or the notification information further includes information used to indicate to obtain the context of the UE when the wake-up time of the UE arrives. The notification information may further include an identifier of the UE or a terminal group identifier, and a terminal group indicated by the terminal group identifier includes the UE. In this way, the network device may set the timer based on the wake-up time, and then obtain the context of the UE based on the wake-up time after the timer expires. In a specific example, the wake-up time included in the notification information sent by the external industry center to the network device is 7:00 a.m., to indicate the network device to obtain the context of the UE when 7:00 a.m. arrives. In this case, the network device may set 7:00 a.m. as an expiration time point of the timer according to a protocol definition or a preconfigured method. Therefore, whenever 7:00 a.m. arrives, the timer of the network device expires, and the network device is triggered to obtain the context of the UE.

For another example, the network device receives indication information from a data management network element, where the indication information is used to indicate that the wake-up time of the UE arrives, and the indication information is sent after a timer on the data management network element expires. In a specific implementation, the obtaining wake-up time in step 201 may be, for example, as follows: The data management network element receives notification information from an external industry center, where the notification information includes the wake-up time of the UE. Optionally, the notification information is used to indicate to notify the network device when the wake-up time of the UE arrives, or the notification information further includes information used to indicate to notify the network device when the wake-up time of the UE arrives. The notification information may further include an identifier of the UE or a terminal group identifier, and a terminal group indicated by the terminal group identifier includes the UE. In this way, the data management network element may set the timer based on the wake-up time, and then send the indication information to the network device after the timer expires, so that the network device can obtain the context of the UE based on the wake-up time. In a specific example, the wake-up time included in the notification information sent by the external industry center to the data management network element is 7:00 a.m., to indicate the network device to notify the network device when 7:00 a.m. arrives. In this case, the data management network element may set 7:00 a.m. as an expiration time point of the timer according to a protocol definition or a preconfigured method. Therefore, whenever 7:00 a.m. arrives, the timer of the network device expires, and the data management network element is triggered to send the indication information to the network device.

In this step, the network device obtains the context of the UE. For example, the network device may obtain the context of the UE from a local database, or may obtain the context of the UE from the data management network element. For example, the network device sends a request message to the data management network element, where the request message is used to request to obtain the context of the UE. In this case, the data management network element sends the context of the UE to the network device. For a specific implementation method in which the local database of the network device or the data management network element stores the context of the UE, refer to descriptions in Embodiment 3.

Step 202: The network device establishes a session of the UE based on the context of the UE.

In this way, after the session of the UE is established, the UE enters a wake-up state.

Based on the foregoing solution, when determining that the wake-up time of the UE is about to arrive (or arrives), the network device obtains the context of the UE. In this way, when the UE initiates establishment of a PDU session, the UE does not need to report the context of the UE again, thereby reducing signaling overheads, helping avoid a signaling storm, and increasing a success rate of entering the wake-up state by the UE.

Further, in the embodiment shown in FIG. 2, after the UE enters the wake-up state, a capacity of the network device may be further increased based on the context of the UE. If a plurality of UEs all enter the wake-up state, the capacity of the network device may be further increased based on a quantity of UEs. In this way, the capacity of the network device can be dynamically adjusted, and the capacity of the network device can be flexibly adjusted based on a service requirement.

Further, if the network device is a RAN device, the RAN device may further adjust deployment of the network device based on a location relationship between the RAN device and the UE. For example, the RAN device adjusts an antenna direction and/or coverage of the network device.

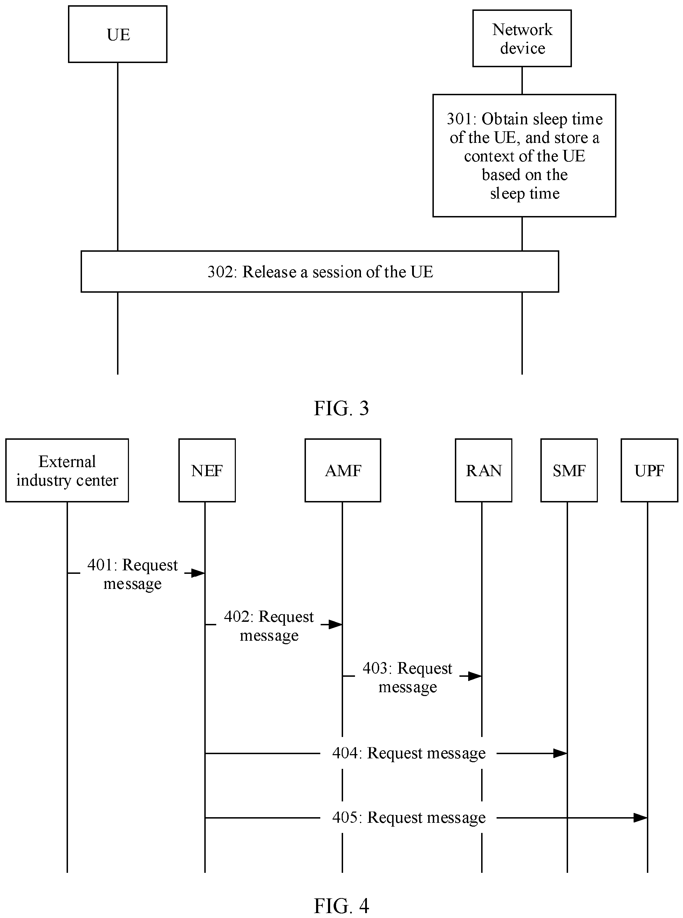

As shown in FIG. 3, this application provides another UE management method. The method is used by UE to enter a sleep state (or a sleep mode) from a wake-up state (or a wake-up mode).

The method includes the following steps.

Step 301: A network device obtains sleep time of the UE, and stores a context of the UE based on the sleep time.

In a first implementation method, when determining that the sleep time of the UE is about to arrive, the network device stores the context of the UE.

For example, a timer is locally configured in the network device. When determining that the local timer expires, the network device determines that the sleep time of the UE is about to arrive. In a specific implementation, the obtaining sleep time of the UE in step 301 may be, for example, as follows: The network device receives notification information from an external industry center, where the notification information includes the sleep time of the UE. Optionally, the notification information is used to indicate to store the context of the UE when the sleep time of the UE is about to arrive, or the notification information further includes information used to indicate to store the context of the UE when the sleep time of the UE is about to arrive. The notification information may further include an identifier of the UE or a terminal group identifier, and a terminal group indicated by the terminal group identifier includes the UE. In this way, the network device may set the timer based on the sleep time, and then store the context of the UE based on the sleep time after the timer expires. In a specific example, the sleep time included in the notification information sent by the external industry center to the network device is 23:00 p.m., to indicate the network device to store the context of the UE when 23:00 p.m. is about to arrive. In this case, the network device may set a moment before 23:00 p.m., for example, 22:59 p.m., as an expiration time point of the timer according to a protocol definition or a preconfigured method. Therefore, whenever 22:59 p.m. arrives, the timer of the network device expires, and the network device is triggered to store the context of the UE.

For another example, the network device receives indication information from a data management network element, where the indication information is used to indicate that the sleep time of the UE is about to arrive, and the indication information is sent after a timer on the data management network element expires. In a specific implementation, the obtaining sleep time of the UE in step 301 may be, for example, as follows: The data management network element receives notification information from an external industry center, where the notification information includes the sleep time of the UE. Optionally, the notification information is used to indicate to notify the network device when the sleep time of the UE is about to arrive, or the notification information further includes information used to indicate to notify the network device when the sleep time of the UE is about to arrive. The notification information may further include an identifier of the UE or a terminal group identifier, and a terminal group indicated by the terminal group identifier includes the UE. In this way, the data management network element may set the timer based on the sleep time, and then send the indication information to the network device after the timer expires, so that the network device can store the context of the UE based on the sleep time. In a specific example, the wake-up time included in the notification information sent by the external industry center to the data management network element is 23:00 p.m., to indicate the network device to notify the network device when 23:00 p.m. is about to arrive. In this case, the data management network element may set a moment before 23:00 p.m., for example, 22:59 p.m., as an expiration time point of the timer according to a protocol definition or a preconfigured method. Therefore, whenever 22:59 p.m. arrives, the timer of the network device expires, and the data management network element is triggered to send the indication information to the network device.

In a second implementation method, when determining that the sleep time of the UE arrives, the network device stores the context of the UE.

For example, a timer is locally configured in the network device. When determining that the local timer expires, the network device determines that the sleep time of the UE arrives. In a specific implementation, the obtaining sleep time of the UE in step 301 may be, for example, as follows: The network device receives notification information from an external industry center, where the notification information includes the sleep time of the UE. Optionally, the notification information is used to indicate to store the context of the UE when the sleep time of the UE arrives, or the notification information further includes information used to indicate to store the context of the UE when the sleep time of the UE arrives. The notification information may further include an identifier of the UE or a terminal group identifier, and a terminal group indicated by the terminal group identifier includes the UE. In this way, the network device may set the timer based on the sleep time, and then store the context of the UE based on the sleep time after the timer expires. In a specific example, the sleep time included in the notification information sent by the external industry center to the network device is 23:00 p.m., to indicate the network device to store the context of the UE when 23:00 p.m. arrives. In this case, the network device may set 23:00 p.m. as an expiration time point of the timer according to a protocol definition or a preconfigured method. Therefore, whenever 23:00 p.m. arrives, the timer of the network device expires, and the network device is triggered to store the context of the UE.

For another example, the network device receives indication information from a data management network element, where the indication information is used to indicate that the sleep time of the UE arrives, and the indication information is sent after a timer on the data management network element expires. In a specific implementation, the obtaining sleep time of the UE in step 301 may be, for example, as follows: The data management network element receives notification information from an external industry center, where the notification information includes the sleep time of the UE. Optionally, the notification information is used to indicate to notify the network device when the sleep time of the UE arrives, or the notification information further includes information used to indicate to notify the network device when the sleep time of the UE arrives. The notification information may further include an identifier of the UE or a terminal group identifier, and a terminal group indicated by the terminal group identifier includes the UE. In this way, the data management network element may set the timer based on the sleep time, and then send the indication information to the network device after the timer expires, so that the network device can store the context of the UE based on the sleep time. In a specific example, the wake-up time included in the notification information sent by the external industry center to the data management network element is 23:00 p.m., to indicate the network device to notify the network device when 23:00 p.m. arrives. In this case, the data management network element may set 23:00 p.m. as an expiration time point of the timer according to a protocol definition or a preconfigured method. Therefore, whenever 23:00 p.m. arrives, the timer of the network device expires, and the data management network element is triggered to send the indication information to the network device.

In this step, the network device obtains the context of the UE. For example, the network device may store the context in a local database, or may store the context in the data management network element. For example, the network device sends a request message to the data management network element, where the request message includes the context of the UE, and the request message is used to request to store the context of the UE. In this case, the data management network element stores the context of the UE.

Step 302: The network device releases a session of the UE.

The network device releases the session of the UE, and then the UE enters a sleep state.

It should be noted that if the network device stores the context of the UE in the data management network element, in step 302, the network device may further delete the context that is of the UE and that is stored in the network device.

Based on the foregoing solution, when determining that the sleep time of the UE is about to arrive (or arrives), the network device stores the context of the UE. In this way, when the UE subsequently needs to initiate establishment of a PDU session, the UE does not need to report the context of the UE again, but directly obtains the context of the UE from storage space in advance, thereby reducing signaling overheads, helping avoid a signaling storm, and increasing a success rate of entering a wake-up state by the UE.

Further, in the embodiment shown in FIG. 3, after the UE enters the sleep state, a capacity of the network device may be further reduced based on the context of the UE. If a plurality of UEs all enter the sleep state, the capacity of the network device may be further reduced based on a quantity of UEs. In this way, the capacity of the network device can be dynamically adjusted, and the capacity of the network device can be flexibly adjusted based on a service requirement.

Further, if the network device is a RAN device, the RAN device may further adjust deployment of the network device based on a location relationship between the RAN device and the UE. For example, the RAN device adjusts an antenna direction and/or coverage of the network device.

It should be noted that the embodiment shown in FIG. 2 and the embodiment shown in FIG. 3 may be separately implemented, or may be implemented in combination, that is, the embodiment shown in FIG. 2 performs the operation of entering the wake-up state by the UE from the sleep state, and the embodiment shown in FIG. 3 performs the operation of entering the sleep state by the UE from the wake-up state.

The embodiments shown in FIG. 2 and FIG. 3 are described in detail below with reference to specific examples.

FIG. 4 is a schematic flowchart of another UE management method according to this application. This embodiment describes a case in which a network side obtains, from an external industry center by using an NEF, information about a working time period (a sleep time period or a wake-up time period) of UE, and description information of an operation that needs to be performed by the network side when the UE enters a sleep state or a wake-up state.

Step 401: The external industry center sends a request message to the NEF.

The request message is used to request the network side to monitor a communication time period (for example, 08:00 to 23:00) of the UE, and the request information includes a UE ID or a group identifier (Group ID), and further includes indication information. The indication information is used to indicate that when the UE is about to enter the sleep state (that is, sleep time is about to arrive), a RAN or a network element in a core network needs to store a context of the corresponding UE in a data management network element (for example, a UDSF), and is used to indicate that when the UE is about to enter the wake-up state (that is, wake-up time is about to arrive), the RAN or the network element in the core network extracts the context of the corresponding UE from the data management network element, or is used to indicate the data management network element to actively send the context of the corresponding UE to the RAN or the network element in the core network.

Step 402 and step 403: The NEF sends a request message to an AMF, and the AMF sends a request message to the RAN, that is, the NEF requests, by using the AMF, the RAN to monitor the communication time period of the UE.

Functions of the request messages and content included in the request messages are the same as the function of the request message and the content of the request message in step 401.

Step 404 and step 405: The NEF requests an SMF and a UPF to monitor the communication time period of the UE.

Functions of the request messages and content included in the request messages are the same as the function of the request message and the content of the request message in step 401.

It should be noted that the request messages in step 401 to step 405 may be a same request message, or may be different request messages, but these request messages have a same function and include same content.

It should be noted that there is no strict execution sequence between the foregoing step 402 to step 404.

In this embodiment, first, the core network side and the RAN side may learn information about the sleep time period of and the wake-up time period of the UE, and some action description information is also configured on the network side and the RAN side, to indicate the core network side and the RAN side to make corresponding changes when the UE is about to sleep or wake up. In other words, when the UE sleeps, the RAN needs to store the context of the corresponding UE in a local database of the RAN or the data management network element. Further, the RAN side may perform capacity reduction on a configured capacity. In addition, an NF in the core network needs to store the context of the corresponding UE in the data management network element, and the network element in the core network may also perform capacity reduction on the configured capacity. However, when the UE is about to enter the wake-up state and start to work, the RAN side and the network element in the core network need to extract the context of the corresponding UE from a corresponding database, and may further each perform capacity expansion on the configured capacity. The configuration information process in this embodiment provides a function of indicating the network side to perform related preparation work when the UE subsequently enters the sleep state and the wake-up state. However, in a conventional technology, the external industry center only notifies a working time period of the UE, but does not indicate the network side and the RAN side to make corresponding changes based on the sleep state and the wake-up state of the UE. Consequently, when the UE enters the wake-up state subsequently, the UE needs to report the context of the UE again, resulting in an unnecessary signaling storm. In addition, corresponding dynamic capacity reduction/expansion processing is not performed on the configured capacity of the network side based on a quantity of UEs in the wake-up state, resulting in low network resource utilization.

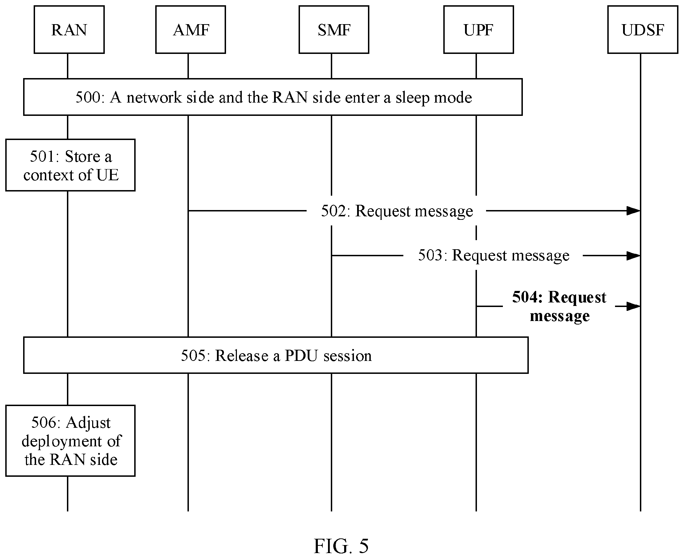

FIG. 5 is a schematic flowchart of another UE management method according to this application. This embodiment describes a related operation procedure performed by a RAN side and a core network side when UE is about to enter a sleep state. This embodiment uses an example in which a data management network element is a UDSF.

Step 500: Sleep time set by an external industry center arrives, to trigger the network side and the RAN side to enter a sleep mode.

Step 501: The RAN stores a context of the UE in a local database.

In an alternative implementation method, the RAN may also store the context of the UE in the UDSF. For example, the RAN sends a request message to the UDSF, where the request message includes the context of the UE and a corresponding UE ID or group ID, so that the UDSR stores the context of the UE on the RAN.

Step 502 to step 504: An AMF, an SMF, and a UPF each send a request message to the UDSF, where the request message includes the context of the UE and the corresponding UE ID or group ID.

It should be noted that in step 502, step 503, and step 504, only some of the steps may be performed, or all of the steps may be performed. For example, if the AMF stores the context of the UE locally, step 502 does not need to be performed and the AMF directly stores the context of the UE locally. For another example, if the SMF stores the context of the UE locally, step 503 does not need to be performed. For another example, if the UPF stores the context of the UE locally, step 504 does not need to be performed.

Step 505: Release a PDU session, release a network resource in an idle state, and reduce configured virtual capacity of related network elements (such as the AMF, the SMF, and the UPF).

In this step, the AMF, the SMF, and the UPF may further delete the context of the UE stored in the AMF, the SMF, and the UPF.

Step 506: The RAN side may adjust deployment of the RAN side based on a relative location of the UE in the sleep state and the UE in the wake-up state, for example, adjust an antenna direction and coverage, and the RAN side may also adjust configured virtual capacity of the RAN side based on a quantity of UEs in the sleep state.

According to the operations in this embodiment, when the UE enters the sleep state, the network side and the RAN actively store the context of the corresponding UE when releasing the PDU session, thereby providing data support for subsequent operations performed by the network side and the RAN side when the UE enters the wake-up mode again. In addition, when the UE enters the sleep state, the RAN side and the core network side reduce the configured virtual capacity of the provided network resources, thereby reducing usage redundancy of the network resources.

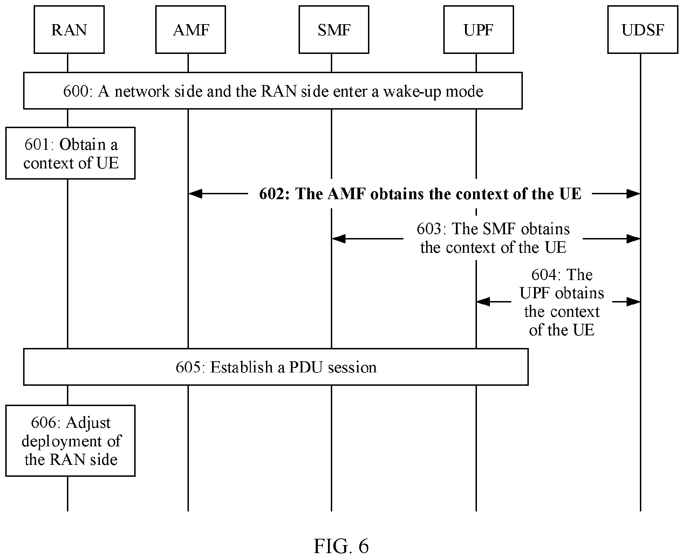

FIG. 6 is a schematic flowchart of another UE management method according to this application. This embodiment describes related operations performed by a RAN side and a core network side when UE is about to enter a wake-up state (where triggering of the wake-up state is implemented by a timer configured on each network element in the core network and a local timer of the RAN.).

Step 600: Wake-up time set by an external industry center arrives, to trigger the network side and the RAN side to enter the wake-up mode.

Step 601: The RAN extracts a context of the UE from a local database.

In an alternative implementation method, the context of the UE on the RAN is stored in a UDSF. In this step, the RAN obtains the context of the UE from the UDSF.

Step 602 to step 604: An AMF, an SMF, and a UPF each obtain the context of the UE from the UDSF.

For example, the AMF, the SMF, and the UPF each initiate a request message to the UDSF, where the request message includes a UE ID or a group ID, and the request message is used to obtain the context of the UE. Then, the UDSF separately sends the context of the UE to the AMF, the SMF, and the UPF.

It should be noted that in step 602, step 603, and step 604, only some of the steps may be performed, or all of the steps may be performed. For example, if the AMF stores the context of the UE locally, step 602 does not need to be performed. For another example, if the SMF stores the context of the UE locally, step 603 does not need to be performed. For another example, if the UPF stores the context of the UE locally, step 604 does not need to be performed.

Step 605: Establish a PDU session, and restore a communication connection. In addition, the core network side increases configured capacity of a related network.

Step 606: The RAN side may adjust deployment of the RAN side based on a relative location of UE in a sleep state and the UE in the wake-up state, for example, adjust an antenna direction and coverage. In addition, the RAN side may also adjust configured virtual capacity of the RAN side based on a quantity of UEs in the wake-up state.

According to the operations in this embodiment, when the UE enters the wake-up mode and reestablishes the PDU session, the UE does not need to report the context of the UE again, and the RAN side and the network element in the core network side actively extract the previously stored context of the UE from a database. In this way, signaling interaction between the UE and the network side is reduced, and a possibility of a signaling storm is reduced. In addition, when a large quantity of UEs enter the wake-up state again, the RAN side and the core network side increase configured virtual capacity of provided network resources to implement a dynamic resource provisioning policy and improve network resource utilization.

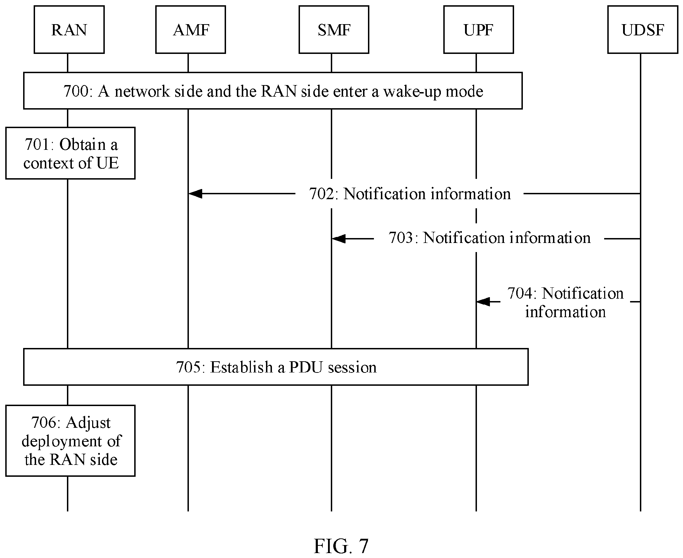

FIG. 7 is a schematic flowchart of another UE management method according to this application. This embodiment describes related operations performed by a RAN side and a core network side when UE is about to enter a wake-up state (where triggering of the wake-up state is implemented by the RAN and a data management network element). This embodiment uses an example in which the data management network element is a UDSF.

Step 700: Wake-up time set by an external industry center arrives, to trigger the UDSF to enter the wake-up mode.

Step 701: The RAN extracts a context of the UE from a local database.

In an alternative implementation method, the context of the UE on the RAN is stored in the UDSF. In this step, the UDSF sends a notification message to the RAN, where the notification information includes the context of the UE and a corresponding UE ID or group ID.

Step 702 to step 704: The UDSF sends notification information to an AMF, an SMF, and a UPF, where the notification information includes the context of the UE and the corresponding UE ID or ID.

It should be noted that in step 702, step 703, and step 704, the notification information in some of the steps may carry the context of the UE, or the notification information in all of the steps may carry the context of the UE. For example, if the AMF stores the context of the UE locally, the notification message in step 702 does not carry the context of the UE, and a function of the notification information is to notify the AMF to obtain the context of the UE locally. For another example, if the SMF stores the context of the UE locally, the notification message in step 703 does not carry the context of the UE, and a function of the notification information is to notify the SMF to obtain the context of the UE locally. For another example, if the UPF stores the context of the UE locally, the notification message in step 704 does not carry the context of the UE, and a function of the notification information is to notify the UPF to obtain the context of the UE locally.

Step 705: Establish a PDU session, and restore a communication connection. In addition, the core network side increases configured capacity of a related network.

Step 706: The RAN side may adjust deployment of the RAN side based on a relative location of UE in a sleep state and the UE in the wake-up state, for example, adjust an antenna direction and coverage. In addition, the RAN side may also adjust configured virtual capacity of the RAN side based on a quantity of UEs in the wake-up state.

According to the operations in this embodiment, when the UE enters the wake-up mode and reestablishes the PDU session, the UE does not need to report the context of the UE again, and the UDSF actively sends the previously stored context of the UE to a network element in the core network. In this way, signaling interaction between the UE and the network side is reduced, and a possibility of a signaling storm is reduced. In addition, when a large quantity of UEs enter the wake-up state and work again, the RAN side and the core network side increase configured virtual capacity of provided network resources to implement a dynamic resource provisioning policy and improve network resource utilization.

It should be noted that the embodiment shown in FIG. 6 or FIG. 7 is a specific implementation of the embodiment shown in FIG. 2. For specific implementation details of the embodiment shown in FIG. 6 or FIG. 7, refer to related descriptions in the embodiment shown in FIG. 2. The embodiment shown in FIG. 5 is a specific implementation of the embodiment shown in FIG. 2. For specific implementation details of the embodiment shown in FIG. 5, refer to related descriptions in the embodiment shown in FIG. 3.

It should be noted that the embodiments shown in FIG. 5 and FIG. 6 may be combined with each other, or the embodiments shown in FIG. 5 and FIG. 7 may be combined with each other.

The foregoing mainly describes the solutions provided in this application from a perspective of interaction between network elements. It may be understood that to implement the foregoing functions, each network element includes a corresponding hardware structure and/or software module for implementing each function. A person of ordinary skill in the art should easily be aware that, in combination with the examples described in the embodiments disclosed in this specification, units and algorithm steps may be implemented by hardware or a combination of hardware and computer software in the present invention. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

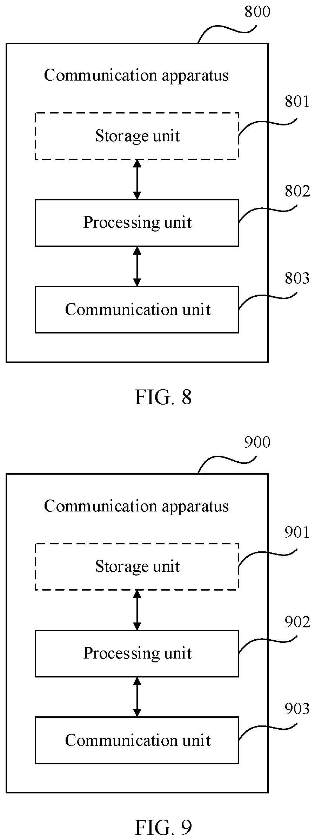

FIG. 8 is a possible example block diagram of a terminal device management apparatus according to this application. The apparatus 800 may exist in a form of software or hardware. The communication apparatus 800 may include a processing unit 802 and a communication unit 803. In an implementation, the communication unit 803 may include a receiving unit and a sending unit. The processing unit 802 is configured to control and manage an action of the communication apparatus 800. The communication unit 803 is configured to support the communication apparatus 800 in communicating with another network entity. The communication apparatus 800 may further include a storage unit 801, configured to store program code and data of the communication apparatus 800.

The processing unit 802 may be a processor or a controller, for example, a general-purpose central processing unit (central processing unit, CPU), a general-purpose processor, digital signal processor (digital signal processor, DSP), an application-specific integrated circuit (application-specific integrated circuits, ASIC), a field programmable gate array (field programmable gate array, FPGA), another programmable logic device, a transistor logic device, a hardware component, or any combination thereof. The processing unit 802 may implement or execute various example logical blocks, modules, and circuits described with reference to content disclosed in this application. The processor may alternatively be a combination of processors implementing a computing function, for example, a combination including one or more microprocessors, or a combination of the DSP and a microprocessor. The storage unit 801 may be a memory. The communication unit 803 is an interface circuit of the apparatus, and is configured to receive a signal from another apparatus. For example, when the apparatus is implemented in a form of a chip, the communication unit 803 is an interface circuit used by the chip to receive a signal from another chip or apparatus, or is an interface circuit used by the chip to send a signal to another chip or apparatus.

The communication apparatus 800 may be the network device in any one of the foregoing embodiments, or may be a chip used in the network device. For example, when the communication apparatus 800 is the network device, the processing unit 802 may be, for example, a processor, and the communication unit 803 may be, for example, a transceiver. Optionally, the transceiver may include a radio frequency circuit, and the storage unit may be, for example, a memory. For example, when the communication apparatus 800 is the chip used in the network device, the processing unit 802 may be, for example, a processor, and the communication unit 803 may be, for example, an input/output interface, a pin, or a circuit. The processing unit 802 may execute computer-executable instructions stored in the storage unit. Optionally, the storage unit is a storage unit in the chip, such as a register or a cache. The storage unit may further be a storage unit, such as a read-only memory (read-only memory, ROM) or another type of static storage device that can store static information and instructions, and a random access memory (random access memory, RAM), that is outside the chip and that is in the network device.

In a first embodiment, the communication apparatus 800 is the network device. The processing unit 802 is configured to: obtain wake-up time of a terminal device, and obtain a context of the terminal device based on the wake-up time; and establish a session of the terminal device based on the context of the terminal device.

In a possible implementation method, the processing unit 802 is specifically configured to: when determining that the wake-up time of the terminal device is about to arrive, obtain the context of the terminal device.

In a possible implementation method, the processing unit 802 is specifically configured to: when determining that a local timer expires, determine that the wake-up time of the terminal device is about to arrive; or receive indication information from a data management network element by using the communication unit 803, where the indication information is used to indicate that the wake-up time of the terminal device is about to arrive, and the indication information is sent after a timer on the data management network element expires.

In a possible implementation method, the processing unit 802 is specifically configured to receive notification information from an external industry center, where the notification information includes the wake-up time of the terminal device.

In a possible implementation method, the notification information is used to indicate to obtain the context of the terminal device when the wake-up time of the terminal device is about to arrive; or the notification information further includes information used to indicate to obtain the context of the terminal device when the wake-up time of the terminal device is about to arrive.

In a possible implementation method, the notification information further includes an identifier of the terminal device and/or a terminal group identifier, and a terminal group indicated by the terminal group identifier includes the terminal device.

In a possible implementation method, the processing unit 802 is further configured to increase a capacity of the network device based on the context of the terminal device.

In a possible implementation method, the processing unit 802 is specifically configured to obtain the context of the terminal device from a local database or the data management network element.

In a possible implementation method, the network device is an access network device, and the processing unit 802 is further configured to adjust deployment of the network device based on a location relationship between the network device and the terminal device.

In a possible implementation method, the processing unit 802 is specifically configured to adjust an antenna direction and/or coverage of the network device.

In a possible implementation method, the network device is an access network device, a mobility management network element, a session management network element, or a user plane network element.

In a second embodiment, the communication apparatus 800 is the network device. The processing unit 802 is configured to: obtain sleep time of a terminal device, and store a context of the terminal device based on the sleep time; and release a session of the terminal device.

In a possible implementation method, the processing unit 802 is specifically configured to: when determining that the sleep time of the terminal device is about to arrive, store the context of the terminal device.

In a possible implementation method, the processing unit 802 is specifically configured to: when determining that a local timer expires, determine that the sleep time of the terminal device is about to arrive; or receive indication information from a data management network element by using the communication unit 803, where the indication information is used to indicate that the sleep time of the terminal device is about to arrive, and the indication information is sent after a timer on the data management network element expires.

In a possible implementation method, the processing unit 802 is specifically configured to receive notification information from an external industry center by using the communication unit 803, where the notification information includes the sleep time of the terminal device.

In a possible implementation method, the notification information is used to indicate to store the context of the terminal device when the sleep time of the terminal device is about to arrive; or the notification information further includes information used to indicate to store the context of the terminal device when the sleep time of the terminal device is about to arrive.

In a possible implementation method, the notification information further includes an identifier of the terminal device and/or a terminal group identifier, and a terminal group indicated by the terminal group identifier includes the terminal device.

In a possible implementation method, the processing unit 802 is further configured to reduce a capacity of the network device based on the context of the terminal device.

In a possible implementation method, the processing unit 802 is specifically configured to: store the context of the terminal device in a local database; and/or store the context of the terminal device in the data management network element.

In a possible implementation method, the network device is an access network device, and the processing unit 802 is further configured to adjust deployment of the network device based on a location relationship between the network device and the terminal device.

In a possible implementation method, the processing unit 802 is specifically configured to adjust an antenna direction and/or coverage of the network device.

In a possible implementation method, the network device is an access network device, a mobility management network element, a session management network element, or a user plane network element.

It may be understood that, for a specific implementation process and a corresponding beneficial effect of the communication apparatus when the communication apparatus is used for the UE management method, refer to related descriptions in the foregoing method embodiments, and details are not described herein again.

FIG. 9 is a possible example block diagram of a terminal device management apparatus according to this application. The communication apparatus 900 may exist in a form of software or hardware. The communication apparatus 900 may include a processing unit 902 and a communication unit 903. In an implementation, the communication unit 903 may include a receiving unit and a sending unit. The processing unit 902 is configured to control and manage an action of the communication apparatus 900. The communication unit 903 is configured to support the communication apparatus 900 in communicating with another network entity. The communication apparatus 900 may further include a storage unit 901, configured to store program code and data of the communication apparatus 900.

The processing unit 902 may be a processor or a controller, for example, a CPU, a general-purpose processor, a DSP, an ASIC, an FPGA, or another programmable logic device, a transistor logic device, a hardware component, or any combination thereof. The processing unit 902 may implement or execute various example logical blocks, modules, and circuits described with reference to content disclosed in this application. The processor may alternatively be a combination of processors implementing a computing function, for example, a combination including one or more microprocessors, or a combination of the DSP and a microprocessor. The storage unit 901 may be a memory. The communication unit 903 is an interface circuit of the apparatus, and is configured to receive a signal from another apparatus. For example, when the apparatus is implemented in a form of a chip, the communication unit 903 is an interface circuit used by the chip to receive a signal from another chip or apparatus, or is an interface circuit used by the chip to send a signal to another chip or apparatus.

The communication apparatus 900 may be the data management network element in any one of the foregoing embodiments, or may be a chip used in the data management network element. For example, when the communication apparatus 900 is the data management network element, the processing unit 902 may be, for example, a processor, and the communication unit 903 may be, for example, a transceiver. Optionally, the transceiver may include a radio frequency circuit, and the storage unit may be, for example, a memory. For example, when the communication apparatus 900 is the chip used in the data management network element, the processing unit 902 may be, for example, a processor, and the communication unit 903 may be, for example, an input/output interface, a pin, or a circuit. The processing unit 902 may execute computer-executable instructions stored in the storage unit. Optionally, the storage unit is a storage unit in the chip, such as a register or a cache. Alternatively, the storage unit may be a storage unit, such as a ROM, another type of static storage device that can store static information and instructions, or a RAM, that is located outside the chip and that is in the data management network element.

In a first embodiment, the communication apparatus 900 is the data management network element. The processing unit 902 is configured to determine that wake-up time of a terminal device is about to arrive; and the communication unit 903 is configured to send indication information to a network device, where the indication information is used to indicate that the wake-up time of the terminal device is about to arrive.

In a possible implementation method, the processing unit 902 is specifically configured to: when determining that a local timer expires, determine that the wake-up time of the terminal device is about to arrive.

In a possible implementation method, the communication unit 903 is further configured to: receive a request message from the network device, where the request message is used to request to obtain the context of the terminal device; and send the context of the terminal device to the network device.

In a second embodiment, the communication apparatus 900 is the data management network element. The processing unit 902 is configured to determine that sleep time of a terminal device is about to arrive; and the communication unit 903 is configured to send indication information to a network device, where the indication information is used to indicate that the sleep time of the terminal device is about to arrive.

In a possible implementation method, the processing unit 902 is specifically configured to: when determining that a local timer expires, determine that the sleep time of the terminal device is about to arrive.

In a possible implementation method, the communication unit 903 is further configured to receive a request message from the network device, where the request message includes the context of the terminal device; and the processing unit 902 is further configured to store the context of the terminal device.

It may be understood that, for a specific implementation process and a corresponding beneficial effect of the communication apparatus when the communication apparatus is used for the UE management method, refer to related descriptions in the foregoing method embodiments, and details are not described herein again.

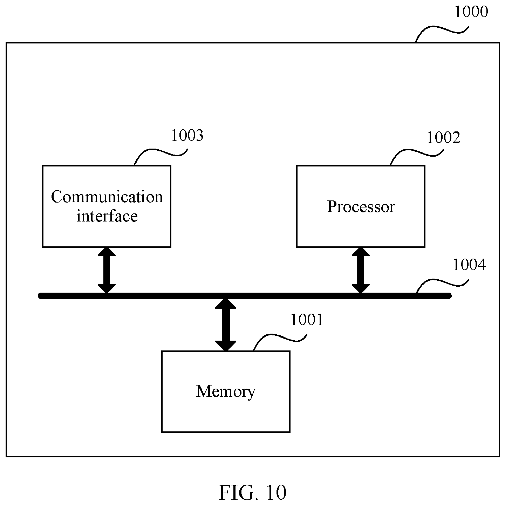

FIG. 10 is a schematic diagram of a terminal device management apparatus according to this application. The communication apparatus may be the network device or the data management network element in the foregoing embodiments. The communication apparatus 1000 includes a processor 1002, a communication interface 1003, and a memory 1001. Optionally, the communication apparatus 1000 may further include a communication line 1004. The communication interface 1003, the processor 1002, and the memory 1001 may be connected to each other through a communication line 1004. The communication line 1004 may be a peripheral component interconnect (peripheral component interconnect, PCI for short) bus, an extended industry standard architecture (extended industry standard architecture, EISA for short) bus, or the like. The communication line 1004 may be classified into an address bus, a data bus, a control bus, and the like. For ease of representation, only one bold line is used to represent the bus in FIG. 10, but this does not mean that there is only one bus or only one type of bus.

The processor 1002 may be a CPU, a microprocessor, an ASIC, or one or more integrated circuits configured to control program execution in the solutions of this application.

The communication interface 1003 uses any apparatus like a transceiver, and is configured to communicate with another device or a communication network, such as the Ethernet, a radio access network (radio access network, RAN), a wireless local area network (wireless local area network, WLAN), or a wired access network.

The memory 1001 may be a ROM or another type of static storage device that can store static information and instructions, or a RAM or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile optical disc, a blue optical disc, and the like), a magnetic disk storage medium or another magnetic storage device, or any other medium that can carry or store expected program code in a form of an instruction structure or a data structure and can be accessed by a computer. However, this is not limited herein. The memory may exist independently, and is connected to the processor through the communication line 1004. The memory may alternatively be integrated with the processor.

The memory 1001 is configured to store computer-executable instructions for executing the solutions of this application, and the processor 1002 controls the execution. The processor 1002 is configured to execute the computer-executable instructions stored in the memory 1001, to implement the UE management method according to the embodiments of this application.

Optionally, the computer-executable instructions in this embodiment of this application may also be referred to as application program code. This is not specifically limited in this embodiment of this application.

A person of ordinary skill in the art may understand that first, second, and various reference numerals in this application are merely distinguished for convenient description, and are not used to limit a scope of the embodiments of this application, and also indicate a sequence. The term "and/or" describes an association relationship for describing associated objects and represents that three relationships may exist. For example, A and/or B may represent the following three cases: Only A exists, both A and B exist, and only B exists. The character "/" usually indicates an "or" relationship between the associated objects. The term "at least one" means one or more. At least two means two or more. "At least one", "any one", or a similar expression thereof means any combination of the items, including a singular item (piece) or any combination of plural items (pieces). For example, at least one (piece, or type) of a, b, or c may indicate: a, b, c, a and b, a and c, b and c, or a, b, and c, where a, b, and c may be singular or plural. The term "a plurality of' indicates two or more, and another quantifier is similar to this. In addition, an element (element) that appears in singular forms "a", "an", and "the" does not mean "one or only one" unless otherwise specified in the context, but means "one or more". For example, "a device" means one or more such devices.

All or some of the foregoing embodiments may be implemented through software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

The various illustrative logical units and circuits described in the embodiments of this application may implement or operate the described functions by using a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may also be implemented by a combination of computing apparatuses, such as a digital signal processor and a microprocessor, a plurality of microprocessors, one or more microprocessors in combination with a digital signal processor core, or any other similar configuration.

Steps of the methods or algorithms described in the embodiments of this application may be directly embedded into hardware, a software unit executed by a processor, or a combination thereof. The software unit may be stored in a RAM memory, a flash memory, a ROM memory, an EPROM memory, an EEPROM memory, a register, a hard disk, a removable magnetic disk, a CD-ROM, or a storage medium of any other form in the art. For example, the storage medium may be connected to a processor, so that the processor may read information from the storage medium and write information to the storage medium. Optionally, the storage medium may further be integrated into the processor. The processor and the storage medium may be disposed in an ASIC.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

Although this application is described with reference to specific features and the embodiments thereof, it is clear that various modifications and combinations may be made to them without departing from the spirit and scope of this application. Correspondingly, the specification and accompanying drawings are merely example description of this application defined by the appended claims, and are considered as any of or all modifications, variations, combinations or equivalents that cover the scope of this application. Obviously, a person skilled in the art can make various modifications and variations to this application without departing from the scope of this application. This application is intended to cover these modifications and variations of this application provided that they fall within the scope of the claims of this application and their equivalent technologies.

## Claims

1. A terminal device management method, comprising:
obtaining, by a network device, wake-up time of a terminal device, and obtaining a context of the terminal device based on the wake-up time; and
establishing, by the network device, a session of the terminal device based on the context of the terminal device.

2. The method according to claim 1, wherein the obtaining a context of the terminal device based on the wake-up time comprises:
when determining that the wake-up time of the terminal device is about to arrive, obtaining, by the network device, the context of the terminal device.

3. The method according to claim 2, wherein the determining, by the network device, that the wake-up time of the terminal device is about to arrive comprises:
when determining that a local timer expires, determining, by the network device, that the wake-up time of the terminal device is about to arrive; or
receiving, by the network device, indication information from a data management network element, wherein the indication information is used to indicate that the wake-up time of the terminal device is about to arrive, and the indication information is sent after a timer on the data management network element expires.

4. The method according to any one of claims 1 to 3, wherein the obtaining, by a network device, wake-up time of a terminal device comprises:
receiving, by the network device, notification information from an external industry center, wherein the notification information comprises the wake-up time of the terminal device.

5. The method according to claim 4, wherein the notification information is used to indicate to obtain the context of the terminal device when the wake-up time of the terminal device is about to arrive; or
the notification information further comprises information used to indicate to obtain the context of the terminal device when the wake-up time of the terminal device is about to arrive.

6. The method according to any one of claims 1 to 5, wherein the obtaining, by a network device, a context of the terminal device comprises:
obtaining, by the network device, the context of the terminal device from a local database or the data management network element.

7. A terminal device management method, comprising:
obtaining, by a network device, sleep time of a terminal device, and storing a context of the terminal device based on the sleep time; and
releasing, by the network device, a session of the terminal device.

8. The method according to claim 7, wherein the storing, by a network device, a context of the terminal device based on the sleep time comprises:
when determining that the sleep time of the terminal device is about to arrive, storing, by the network device, the context of the terminal device.

9. The method according to claim 8, wherein the determining, by the network device, that the sleep time of the terminal device is about to arrive comprises:
when determining that a local timer expires, determining, by the network device, that the sleep time of the terminal device is about to arrive; or
receiving, by the network device, indication information from a data management network element, wherein the indication information is used to indicate that the sleep time of the terminal device is about to arrive, and the indication information is sent after a timer on the data management network element expires.

10. The method according to any one of claims 7 to 9, wherein the obtaining, by a network device, sleep time of a terminal device comprises:
receiving, by the network device, notification information from an external industry center, wherein the notification information comprises the sleep time of the terminal device.

11. The method according to claim 10, wherein the notification information is used to indicate to store the context of the terminal device when the sleep time of the terminal device is about to arrive; or
the notification information further comprises information used to indicate to store the context of the terminal device when the sleep time of the terminal device is about to arrive.

12. The method according to any one of claims 7 to 11, wherein the storing, by a network device, a context of the terminal device comprises:
storing, by the network device, the context of the terminal device in a local database; and/or
storing, by the network device, the context of the terminal device in the data management network element.

13. The method according to any one of claims 1 to 12, wherein the network device is an access network device, and the method further comprises:
adjusting, by the network device, deployment of the network device based on a location relationship between the network device and the terminal device.

14. The method according to claim 13, wherein the adjusting, by the network device, deployment of the network device comprises:
adjusting, by the network device, an antenna direction and/or coverage of the network device.

15. The method according to any one of claims 1 to 12, wherein the network device is an access network device, a mobility management network element, a session management network element, or a user plane network element.

16. A terminal device management apparatus, comprising:
a processing unit, configured to: obtain wake-up time of a terminal device, and obtain a context of the terminal device based on the wake-up time; and establish a session of the terminal device based on the context of the terminal device.

17. The apparatus according to claim 16, wherein the processing unit is specifically configured to:
when determining that the wake-up time of the terminal device is about to arrive, obtain the context of the terminal device.

18. The apparatus according to claim 17, wherein the processing unit is specifically configured to:
when determining that a local timer expires, determine that the wake-up time of the terminal device is about to arrive; or
the apparatus further comprises a communication unit, and the processing unit is specifically configured to receive indication information from a data management network element by using the communication unit, wherein the indication information is used to indicate that the wake-up time of the terminal device is about to arrive, and the indication information is sent after a timer on the data management network element expires.

19. The apparatus according to any one of claims 16 to 18, wherein the apparatus further comprises the communication unit, and the processing unit is specifically configured to:
receive notification information from an external industry center by using the communication unit, wherein the notification information comprises the wake-up time of the terminal device.

20. The apparatus according to claim 19, wherein the notification information is used to indicate to obtain the context of the terminal device when the wake-up time of the terminal device is about to arrive; or
the notification information further comprises information used to indicate to obtain the context of the terminal device when the wake-up time of the terminal device is about to arrive.

21. The apparatus according to any one of claims 16 to 20, wherein the processing unit is specifically configured to:
obtain the context of the terminal device from a local database or the data management network element.

22. A terminal device management apparatus, comprising:
a processing unit, configured to: obtain sleep time of a terminal device, and store a context of the terminal device based on the sleep time; and release a session of the terminal device.

23. The apparatus according to claim 22, wherein the storing, by a network device, a context of the terminal device based on the sleep time comprises:
when determining that the sleep time of the terminal device is about to arrive, storing, by the network device, the context of the terminal device.

24. The apparatus according to claim 23, wherein the processing unit is specifically configured to:
when determining that a local timer expires, determine that the sleep time of the terminal device is about to arrive; or
the apparatus further comprises a communication unit, and the processing unit is specifically configured to receive indication information from a data management network element by using the communication unit, wherein the indication information is used to indicate that the sleep time of the terminal device is about to arrive, and the indication information is sent after a timer on the data management network element expires.

25. The apparatus according to any one of claims 22 to 24, wherein the apparatus further comprises the communication unit, and the processing unit is specifically configured to:
receive notification information from an external industry center by using the communication unit, wherein the notification information comprises the sleep time of the terminal device.

26. The apparatus according to claim 25, wherein the notification information is used to indicate to store the context of the terminal device when the sleep time of the terminal device is about to arrive; or
the notification information further comprises information used to indicate to store the context of the terminal device when the sleep time of the terminal device is about to arrive.

27. The apparatus according to any one of claims 22 to 26, wherein the processing unit is specifically configured to:
store the context of the terminal device in a local database; and/or
store the context of the terminal device in the data management network element.

28. The apparatus according to any one of claims 16 to 27, wherein the apparatus is an access network device, and the processing unit is further configured to adjust deployment of the network device based on a location relationship between the network device and the terminal device.

29. The apparatus according to claim 28, wherein the processing unit is specifically configured to adjust an antenna direction and/or coverage of the network device.

30. The apparatus according to any one of claims 16 to 27, wherein the apparatus is an access network device, a mobility management network element, a session management network element, or a user plane network element.

31. A communication apparatus, comprising a communication interface and at least one processor, wherein the communication interface and the at least one processor are interconnected through a line, and the communication interface is configured to perform operations of receiving and sending a message on the apparatus side in the method according to any one of claims 1 to 6; and
the at least one processor invokes instructions, to perform an operation of processing or control the message on the apparatus side in the method according to any one of claims 1 to 6.

32. A communication apparatus, comprising a communication interface and at least one processor, wherein the communication interface and the at least one processor are interconnected through a line, and the communication interface is configured to perform operations of receiving and sending a message on the apparatus side in the method according to any one of claims 7 to 15; and
the at least one processor invokes instructions, to perform an operation of processing or control the message on the apparatus side in the method according to any one of claims 7 to 15.

33. A chip system, wherein the chip system comprises at least one processor and an interface circuit, the interface circuit and the at least one processor are interconnected through a line, and the processor runs instructions to perform the method according to any one of claims 1 to 6.

34. A chip system, wherein the chip system comprises at least one processor and an interface circuit, the interface circuit and the at least one processor are interconnected through a line, and the processor runs instructions to perform the method according to any one of claims 7 to 15.

35. A communication apparatus, configured to perform the method according to any one of claims 1 to 6.

36. A communication apparatus, configured to perform the method according to any one of claims 7 to 15.

37. A computer program product comprising instructions, wherein when the computer program product runs on a computer, the computer is enabled to perform the method according to any one of claims 1 to 6.

38. A computer program product comprising instructions, wherein when the computer program product runs on a computer, the computer is enabled to perform the method according to any one of claims 7 to 15.

39. A computer-readable storage medium, comprising instructions, wherein when the instructions are run on a computer, the computer is enabled to perform the method according to any one of claims 1 to 6.

40. A computer-readable storage medium, comprising instructions, wherein when the instructions are run on a computer, the computer is enabled to perform the method according to any one of claims 7 to 15.
